Europäisches Patentamt

European Patent Office

Office européen des brevets

(19)

(11) **EP 1 193 930 B1**

(12) **FASCICULE DE BREVET EUROPEEN**

(45) Date de publication et mention
de la délivrance du brevet:
**11.02.2004 Bulletin 2004/07**

(51) Int Cl.⁷: **H04L 25/02**, H04B 7/08

(21) Numéro de dépôt: **01402542.3**

(22) Date de dépôt: **02.10.2001**

(54) **Séquence d'estimation de canal et procédé d'estimation d'un canal de transmission qui utilise une telle séquence d'estimation de canal**

Sequenz zur Kanalschätzung und Verfahren zur Schätzung eines Übertragungskanals, das eine solche Sequenz zur Kanalschätzung verwendet

Sequence for channel estimation and method for estimating a transmission channel which uses such a sequence for channel estimation

(84) Etats contractants désignés:
**AT BE CH CY DE DK ES FI FR GB GR IE IT LI LU MC NL PT SE TR**

(30) Priorité: **02.10.2000 FR 0012761**

(43) Date de publication de la demande:
**03.04.2002 Bulletin 2002/14**

(73) Titulaire: **Mitsubishi Electric Information Technology Centre Europe B.V.
1119 NS Schiphol Rijk (NL)**

(72) Inventeurs:
• **Jechoux, Bruno, c/o Mitsubishi Electricite
35700 Rennes (FR)**
• **Rudolf, Marian, c/o Mitsubishi Electricite
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**EP-A- 0 892 504**

• **SPASOJEVIC P ET AL: "ISI channel estimation using complementary sequences" 2000 IEEE INTERNATIONAL SYMPOSIUM ON INFORMATION THEORY (CAT. NO.00CH37060), 2000 IEEE INTERNATIONAL SYMPOSIUM ON INFORMATION THEORY, SORRENTO, ITALY, 25-30 JUNE 2000, page 55 XP002169520 2000, Piscataway, NJ, USA, IEEE, USA ISBN: 0-7803-5857-0**
• **TELLAMBURA C ET AL: "CHANNEL ESTIMATION USING APERIODIC BINARY SEQUENCES" IEEE COMMUNICATIONS LETTERS,IEEE SERVICE CENTER, PISCATAWAY,US,US, vol. 2, no. 5, 1 mai 1998 (1998-05-01), pages 140-142, XP000766142 ISSN: 1089-7798**
• **SPASOJEVIC P ET AL: "Complementary sequences for ISI channel estimation" IEEE TRANSACTIONS ON INFORMATION THEORY, MARCH 2001, IEEE, USA, vol. 47, no. 3, pages 1145-1152, XP002169521 ISSN: 0018-9448**
• **DATABASE INTERNET [en ligne] P. Spasojevic, C.N. Georghiades,; http://ee-wcl.tamu.edu/~spale/publications .html, décembre 1999 (1999-12) P. SPASOJEVIC, C.N. GEORGHIADES,: "Sequence and Channel Estimation for Channels with Memory" retrieved from HTTP://EE-WCL.TAMU.EDU/~SPALE/PUBLICAT IONS .HTML XP002169522**

**Description**

La présente invention concerne une séquence d'estimation de canal destinée à être émise par un émetteur à destination d'un récepteur via un canal. Une telle séquence est par exemple utilisée dans un procédé d'estimation d'un canal de transmission objet également de la présente invention. Ce procédé d'estimation de canal a pour résultat une estimation optimale des retards, des phases et des atténuations des différents trajets dans le cas d'un canal à un seul trajet ou à trajets multiples. Comme on le comprendra par la suite, cette estimation optimale est obtenue dans un fenêtre temporelle de durée qui est déterminée et qui peut donc être choisie lors de la construction de la séquence d'estimation de canal.

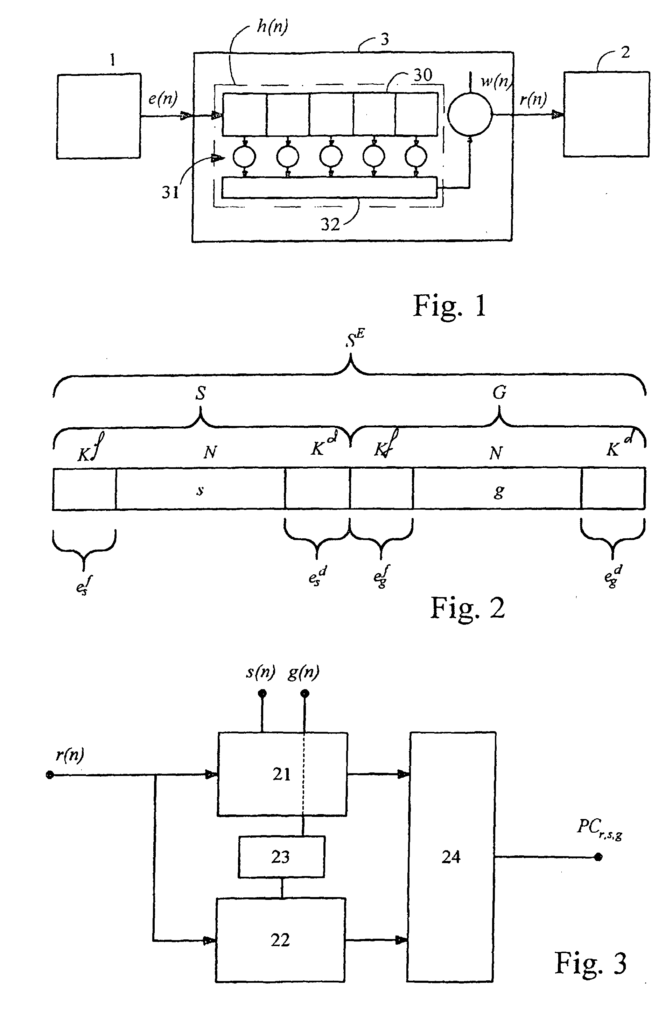

Dans un système de télécommunication, les informations circulent entre des émetteurs et des récepteurs par l'intermédiaire de canaux. La Fig. 1 illustre un modèle discret dans le temps de la chaîne de transmission entre un émetteur 1 et un récepteur 2 par l'intermédiaire d'un canal de transmission 3. D'une manière générale, les canaux de transmissions peuvent correspondre à différents supports physiques, radioélectriques, filaires, optiques, etc., et à différents environnements, communications fixes ou mobiles, satellites, câbles sous-marins, etc.

Du fait des réflexions multiples dont peuvent être l'objet les ondes émises par l'émetteur 1, le canal 3 est un canal dit multi-trajet du fait qu'entre l'émetteur 1 et le récepteur 2 se trouvent généralement des obstacles qui conduisent à des réflexions des ondes se propageant alors selon plusieurs trajets. Un canal multi-trajet est généralement modélisé comme l'indique la Fig. 1, c'est-à-dire constitué d'un registre à décalage 30 comportant $L$ cases en série (ici $L = 5$) référencées par un indice $k$ pouvant prendre les valeurs comprises entre 1 et $L$ et dont les contenus glissent vers la droite sur la Fig. 1 à chaque arrivée d'un symbole sur son entrée. La sortie de chaque case d'indice $k$ est soumis à un filtre 31 qui est représentatif de la perturbation subie et qui agit sur l'amplitude avec une atténuation $a_k$, apporte un déphasage $\alpha_k$ et un retard $r_k$. La sortie de chaque filtre 31 est alors sommée dans un sommateur 32. La réponse impulsionnelle globale ainsi obtenue est notée $h(n)$. Cette réponse impulsionnelle du canal $h(n)$ peut s'écrire sous la forme :

$$h(n) = \sum_{k=1}^{L} a_k \delta(n - r_k) e^{j\alpha_k}$$

où $\delta(n)$ représentant l'impulsion de Dirac, $\delta(n - r_k)$ dénote une fonction retard de la valeur $r_k$.

La sortie du sommateur 32 est fournie à l'entrée d'un additionneur 33 pour l'addition d'un signal aléatoire, modélisé par un bruit blanc gaussien w(n), qui correspond au bruit thermique présent dans le système de télécommunications.

On comprendra que si l'émetteur 1 émet le signal $e(n)$, le signal reçu $r(n)$ par le récepteur 2 peut s'écrire sous la forme :

$$\bar{r}(n) = e(n) * h(n) + w(n)$$

$$= e(n) * \sum_{k=1}^{L} a_k \delta(n - r_k) e^{j\alpha_k} + w(n)$$

$$= \sum_{k=1}^{L} a_k e(n - r_k) e^{j\alpha_k} + w(n)$$

L'opérateur * désigne le produit de convolution, défini de manière générale par la relation suivante :

$$c(n) = a(n) * b(n) = \sum_{m=-\infty}^{+\infty} a(m) \cdot b(n - m)$$

Afin de contrecarrer la distorsion induite du signal émis *e(n)* par l'émetteur 1, il est nécessaire de déterminer ou d'estimer à chaque instant les caractéristiques du canal 3, c'est-à-dire estimer l'ensemble des coefficients $a_k$, $r_k$ et $\alpha_k$ du modèle du canal 3 représenté à la Fig. 1. Il est nécessaire de répéter cette opération d'estimation à une fréquence plus ou moins grande selon la rapidité avec laquelle les caractéristiques du canal évoluent.

Une méthode répandue d'estimation du canal consiste à faire émettre, par l'émetteur 1, des signaux pilotes *e(n)* prédéterminés et connus du récepteur 2 et à comparer les signaux reçus *r(n)* dans le récepteur 2, par exemple au moyen d'une corrélation apériodique, avec ceux qui y sont attendus pour en déduire les caractéristiques du canal 3 entre l'émetteur 1 et le récepteur 2.

On rappelle que la corrélation apériodique de deux signaux de longueur N a une longueur totale 2N-1 et s'exprime, à partir du produit de convolution, par la relation suivante :

$$\varphi_{a,b}(n) = a^*(-n) * b(n) = \sum_{m=-(N-1)}^{N-1} a(m) \cdot b(m+n)$$

pour deux signaux *a(n)* et *b(n)* de longueur finie N, où le signe en exposant * dénote l'opération conjuguée complexe.

Le résultat de l'opération de corrélation apériodique constitue l'estimé de la réponse impulsionnelle du canal.

La corrélation apériodique du signal *r(n)* reçu par le récepteur 2 avec le signal *e(n)* émis par l'émetteur 1 et connu par le récepteur 2 peut s'écrire donc de la manière suivante :

$$\begin{aligned}
\varphi_{e,r}(n) &= r(n) * e^*(-n) \\
&= [e(n) * h(n) + w(n)] * e^*(-n) \\
&= \varphi_{e,e*h}(n) + \varphi_{e,w}(n) \\
&= \varphi_{e,e}(n) * h(n) + \varphi_{e,w}(n)
\end{aligned}$$

Dans la pratique, on va choisir la séquence *e(n)* émise par l'émetteur 1 de manière que l'auto-corrélation $\varphi_{e,e}(n)$ tende vers $k \cdot \delta(n)$, *k* étant un nombre réel, et que $\varphi_{e,w}(n)/\varphi_{e,e}(n)$ tende vers 0. En effet, la corrélation apériodique peut alors s'écrire :

$$\begin{aligned}
\varphi_{e,r}(n) &= k \cdot \delta(n) * h(n) + \varphi_{e,w}(n) \\
&= k \cdot h(n) + \varphi_{e,w}(n)
\end{aligned}$$

Du fait que $\varphi_{e,w}(n)$ est négligeable devant $\varphi_{e,e}(n)$, on peut donc écrire :

$$\varphi_{e,r}(n) \approx k \cdot h(n)$$

On constate alors que, compte tenu des hypothèses ci-dessus, le résultat de la corrélation apériodique du signal *r(n)* reçu par le récepteur 2 avec le signal *e(n)* émis par l'émetteur 1 et connu par le récepteur 2 constitue l'estimé de la réponse impulsionnelle du canal 3.

On a pu montrer qu'il n'existe pas de séquence unique *e(n)* pour laquelle la fonction d'auto-corrélation apériodique $\varphi_{e,e}(n) = k. \delta(n)$.

Le but de la présente invention est de proposer un procédé d'estimation d'un canal de transmission ou de télécommunication donnant un résultat très faiblement bruité. En particulier, un but de la présente invention est de proposer un procédé d'estimation dans lequel on obtient un pic de corrélation isolé et prononcé.

Plus précisément, l'invention est définie par une séquence d'estimation de canal destinée à être émise par un émetteur à destination d'un récepteur via un canal, ladite séquence d'estimation de canal étant constituée de deux séquences concaténées, comprenant respectivement deux séquences complémentaires, lesdites deux séquences complémentaires étant étendues par des extensions constituant des répliques de leur partie de début et/ou de leur partie de fin et étant respectivement concaténées en fin et/ou en début de séquence.

Avantageusement, les longueurs desdites extensions sont telles que leur somme est supérieure à la longueur du canal.

Les longueurs desdites extensions seront par exemple égales à une valeur prédéterminée.

L'invention est égalemnt définie par un procédé d'estimation des caractéristiques d'un canal de transmission entre un émetteur et un récepteur, ledit procédé consistant, côté émetteur, à transmettre audit récepteur une séquence d'estimation de canal telle que décrite ci-dessus et, côté récepteur, à corréler ledit signal reçu avec la première et la seconde desdites séquences complémentaires.

Avantageusement, le signal reçu est corrélé, d'une part, avec la première desdites séquences complémentaires et, d'autre part, avec la seconde desdites séquences complémentaires retardée par rapport à la première. Les résultats des deux corrélations sont ensuite additionnés pour fournir un signal de corrélation. Le retard de ladite seconde séquence est choisi égal à la longueur de la première séquence additionnée, d'une part, de l'extension droite de la première séquence et, d'autre part, de l'extension gauche de la seconde séquence.

Les caractéristiques dudit canal sont alors déduites du résultat du signal de corrélation dans une fenêtre temporelle [$-K^f$, $K^d$], où $K^f$ et $K^d$ sont les longueurs respectives desdites extensions.

Typiquement, les caractéristiques dudit canal sont déduites des caractéristiques d'un pic de corrélation au sein de ladite fenêtre temporelle, en particulier de sa position à l'intérieur de cette dernière.

La présente invention concerne également un procédé d'estimation des caractéristiques d'un canal de transmission entre un émetteur et un récepteur utilisant une séquence d'estimation de canal telle qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue schématique d'un système de transmission,
La Fig. 2 est un schéma d'une séquence d'estimation de canal selon la présente invention, émise par un émetteur d'un système de transmission, et
La Fig. 3 est un schéma synoptique d'un dispositif de corrélation selon la présente invention.

Selon l'invention, la séquence d'estimation de canal $S^E$ est constitué de deux séquences $S$ et $G$ concaténées (la seconde séquence $G$ est décalée dans le temps de la longueur de la première séquence $S$), respectivement formées à partir de deux séquences complémentaires $s$ et $g$. On appelle ici séquences complémentaires des séquences ayant pour propriété remarquable que la somme de leurs auto-corrélations apériodiques est une fonction de Dirac parfaite.

Autrement dit, si on appelle $s(n)$ et $g(n)$ avec $n = 0,1,...,N-1$ deux séquences complémentaires, on peut donc, par définition, écrire :

$$\varphi_{s,s}(n) + \varphi_{g,g}(n) = k \cdot \delta(n) \qquad (1)$$

Plusieurs procédés sont connus dans la littérature pour construire de telles séquences complémentaires : séquences complémentaires de Golay, séquences complémentaires polyphases, séquences de Welti, etc.

Par exemple, lesdites deux séquences $s$ et $g$ seront des séquences complémentaires de Golay, ou des séquences complémentaires polyphases, ou des séquences de Welti, etc.

Chaque séquence complémentaire $s$ et $g$ a un longueur de $N$. Elles peuvent donc s'écrire :

$$s = \{s_1\ s_2\ s_3\ ...s_N\}$$

et

$$g = \{g_1\ g_2\ g_3\ ...\ g_N\}$$

Selon la présente invention, afin d'obtenir les séquences $S$ et $G$, les séquences $s$ et $g$ sont étendues par des extensions constituant des répliques de leur partie de début et/ou de leur partie de fin respectivement concaténées en fin et/ou en début de séquence. On parle alors d'extensions périodiques.

Dans le mode de réalisation représenté à la Fig .2, les séquences s et g sont étendues périodiquement à droite et à gauche respectivement par des extensions $e_s^f$, $e_s^d$ et $e_g^f$, $e_g^d$. Les extensions $e_s^f$ et $e_g^f$ sont des répliques des parties respectives de fin des séquences $s$ et $g$. Quant aux extensions $e_s^d$ et $e_g^d$, elles sont des répliques des parties respectives de début des mêmes séquences $s$ et $g$.

Les longueurs respectives des extensions sont notées $K^f$ et $K^d$. Selon le mode de réalisation représenté à la Fig. 2, les longueurs $K^f$ et $K^d$ sont égales à une même valeur $K$.

Ainsi, dans le mode de réalisation particulier de la Fig. 2, les extensions peuvent s'écrire de la manière suivante :

$$e_s^f = \{s_{N-K+1}, s_{N-K+2}, ..., s_N\}$$

$$e_s^d = \{s_1, s_2, ..., s_K\}$$

$$e_g^d = \{g_1, g_2, ..., g_K\}$$

$$e_g^f = \{g_{N-K+1}, g_{N-K+2}, ..., g_N\}$$

On notera que, dans des modes de réalisation spécifiques, soit la longueur $K^f$, soit la longueur $K^d$, pourrait être nulle.

A la Fig. 3, le signal reçu r(n) par le récepteur 2 est appliqué, d'une part, à un premier corrélateur 21 et, d'autre part, à un second corrélateur 22. Le premier corrélateur 21 établit la corrélation du signal $r(n)$ avec la séquence $s(n)$ qui a servi à l'élaboration de la séquence d'estimation de canal $S^E$ tandis que le second corrélateur 22 établit la corrélation du même signal $r(n)$ avec l'autre séquence $g(n)$ ayant également servi à l'élaboration de la séquence d'estimation de canal $S^E$ préalablement retardée, dans un retardateur 23, de la somme de la longueur $N$ de la première séquence $s(n)$ additionnée aux longueurs $K^d$ et $K^f$ de l'extension gauche $e_s^d$ de la première séquence $s(n)$ et de l'extension droite $e_g^f$ de la seconde séquence $g(n)$. Ainsi, le premier corrélateur 21 réalise la fonction de corrélation $\varphi(r(n),s(n))$ tandis que le second corrélateur 22 réalise la fonction

$$\varphi\big(r(n), g(n - N - K^d - K^f)\big).$$

Les sorties respectives des premier et second corrélateurs 21 et 22 sont reliées aux entrées respectives d'un sommateur 24 qui délivre alors le signal de corrélation $PC_{r,s,g}$ suivant :

$$PC_{r,s,g} = \varphi\big(r(n),s(n)\big) + \varphi\big(r(n), g(n - N - K^d - K^f)\big)$$

On peut montrer qu'en théorie, ce signal de corrélation, dans la fenêtre $[-K^f, K^d]$, est, à une constante près, une impulsion de Dirac.

En effet, dans le cas où $K^f = K^d = K$, ce signal de corrélation peut s'écrire :

$$PC_{e,s,g}(n) = \varphi(e(n),s(n)) + \varphi(e(n),g(n - N - 2K))$$

$$= \varphi(S(n),s(n)) + \varphi(S(n),g(n - N - 2K)) + \varphi(G(n - N - 2K), s(n)) +$$

$$\varphi(G(n - N - 2K), g(n - N - 2K))$$

Or chacun des termes du second membre de l'égalité est de longueur 2(N+K)-1, ce qui signifie que les termes d'inter-corrélation

$$\varphi\left(S(n), g(n - N - 2K)\right)$$

et

$$\varphi(G(n - N - 2K),$$

$s(n)$) sont nuls pour $n \in [-K, K]$ quand K<N. Par conséquent, dans l'intervalle $[-K, K]$ avec K<N, le signal de corrélation se réduit à :

$$PC_{e,s,g}(n) = \varphi(S(n), s(n)) + \varphi\left(G(n - N - 2K), g(n - N - 2K)\right)$$
$$= \varphi(S(n), s(n)) + \varphi\left(G(n), g(n)\right)$$
$$= \varphi_{s,s}(n) + \varphi_{g,g}(n)$$
$$= k\delta(n)$$

Par ailleurs, de manière générale, la longueur du signal de corrélation $PC_{r,s,g}$ est égale à $2N+K^f+K^d-1$.

En pratique, il est possible de déterminer, à partir de la position du pic du signal de corrélation $PC_{r,s,g}$ dans une fenêtre d'analyse $[-K^f, K^d]$ incluse dans le signal de corrélation, la position temporelle du signal reçu $r(n)$ par le récepteur 2. En d'autres termes, il est possible de déterminer le retard $r_k$ engendré par le canal 3. Les caractéristiques du pic dans la fenêtre d'analyse permettent également de déterminer les autres caractéristiques du canal 3, à savoir l'atténuation $a_k$ et le déphasage $\alpha_k$ engendrés par le canal 3.

Si la largeur $(K^f + K^d)$ de la fenêtre d'analyse $[-K^f, K^d]$ est supérieure ou égale à la longueur $L$ du canal 3, il est possible de déterminer de manière parfaite la position temporelle de tous les signaux reçus $r(n)$ de tous les trajets.

En dehors de cette fenêtre d'analyse $[-K^f, K^d]$, il est encore possible de déterminer les positions des signaux reçus mais de manière imparfaite. Une telle analyse en dehors de la fenêtre $[-K^f, K^d]$ peut être menée lorsque la largeur $(K^f + K^d)$ de la fenêtre $[-K^f, K^d]$ est inférieure à la longueur $L$.

## Revendications

1. Séquence d'estimation de canal $S^E$ émise par un émetteur (1) à destination d'un récepteur (2) via un canal (3), ladite séquence d'estimation de canal étant constituée de deux séquences S et G concaténées, comprenant respectivement deux séquences complémentaires $s$ et $g$, **caractérisée en ce que** lesdites deux séquences complémentaires $s$ et $g$ sont respectivement étendues par des extensions $e_s^f$ et/ou $e_s^d$ et $e_g^f$ et/ou $e_g^d$ qui constituent des répliques de leur partie de fin et/ou de leur partie de début et qui sont respectivement concaténées en début et/ou en fin desdites séquences complémentaires $s$ et $g$.

2. Séquence d'estimation de canal selon la revendication 1, **caractérisée en ce que** les longueurs $K^f, K^d$ desdites extensions sont telles que leur somme est supérieure à la longueur $L$ du canal (3).

3. Séquence d'estimation de canal selon la revendication 1 ou 2, **caractérisée en ce que** les longueurs $K^f, K^d$ desdites extensions sont égales à une valeur prédéterminée $K$.

4. Procédé d'estimation des caractéristiques d'un canal de transmission (3) entre un émetteur (1) et un récepteur (2), ledit procédé consistant, côté émetteur (1), à transmettre audit récepteur (2) une séquence d'estimation de canal $S^E$ selon l'une des revendications 1 à 3 et, côté récepteur (2), à corréler ledit signal reçu avec la première s et avec la seconde g desdites séquences complémentaires.

5. Procédé d'estimation selon la revendication 4, **caractérisé en ce que** le signal reçu est corrélé, d'une part, avec la première s desdites séquences complémentaires et, d'autre part, avec la seconde g desdites séquences complémentaires retardée par rapport à la première, et que les résultats des deux corrélations sont additionnés pour fournir un signal de corrélation, le retard de ladite seconde séquence étant choisi égal à la longueur de la première séquence additionnée, d'une part, de l'extension droite de la première séquence et, d'autre part, de l'extension gauche de la seconde séquence.

6. Procédé d'estimation selon la revendication 5, **caractérisé en ce que** lesdites caractéristiques dudit canal (3) sont déduites du résultat du signal de corrélation dans une fenêtre temporelle [-$K^f$, $K^d$], où $K^f$ et $K^d$ sont les longueurs respectives desdites extensions $e_s^f$, $e_s^d$ et $e_g^f$, $e_g^d$.

7. Procédé d'estimation selon la revendication 6, **caractérisé en ce que** lesdites caractéristiques dudit canal (3) sont déduites des caractéristiques d'un pic de corrélation au sein de ladite fenêtre temporelle.

8. Procédé d'estimation selon la revendication 7, **caractérisé en ce que** lesdites caractéristiques du pic de corrélation comprennent sa position temporelle dans ladite fenêtre.

## Claims

1. Channel estimation sequence $S^E$ transmitted by a transmitter (1) to a receiver (2) over a channel (3), said channel estimation sequence being constituted of two concatenated sequences S and G comprising respectively two complementary sequences s and g, **characterized in that** said complementary sequences s and g are respectively extended by extensions $e^f$ and/or $e_s^d$ et $e^f$ and/or $e_g^d$ which are replicas of their ending part and/or their starting part and which are respectively concatenated to the beginning and/or the end of said complementary sequences.

2. Channel estimation sequence according to claim 1, **characterized in that** the length $K^f$, $K^d$ of said extensions are such that the sum thereof is upper than the length L of the channel (3).

3. Channel estimation sequence according to claim 1 or 2, **characterized in that** the length $K^f$, $K^d$ of said extensions are equal to a predetermined value K.

4. Method of estimating the features of a transmission channel (3) between a transmitter (1) and a receiver (2), said method comprising the step, on the transmitter side, of transmitting to the receiver (2) a channel estimation sequence $S^E$ according to one of claims 1 to 3, and, on the receiver side, the step of correlating the received signal with the first s and second g complementary sequences.

5. Method of estimating the features of a transmission channel (3) according to claim 4, **characterized in that** the received signal is correlated, on one hand, with the first complementary sequence s and, on the other hand, with the second complementary sequence g delayed from the first sequence and that the result of the two correlations are summed in order to deliver a correlation signal, the delay of the said second complementary sequence being chosen as equal to the length of the first sequence along with the right extension of said first sequence et the left extension of said second sequence.

6. Method of estimating the features of a transmission channel (3) according to claim 5, **characterized in that** the features of said transmission channel (3) are deduced from the result of the correlation signal in a temporal window [-$K^f$, $K^d$], where $K^f$ et $K^d$ are the respective lengths of said extensions $e_s^f$, $e_s^d$ et $e_g^f$, $e_g^d$.

7. Method of estimating the features of a transmission channel (3) according to claim 6, **characterized in that** the features of said transmission channel (3) are deduced from a peak of correlation inside said temporal window.

8. Method of estimating the features of a transmission channel (3) according to claim 7, **characterized in that** the features of the correlation peak include the temporal location thereof inside said temporal window.

## Patentansprüche

1. Kanatabschätzsequenz S$^E$, die durch einen Sender (1) über einen Kanal (3) zu einem Empfänger (2) gesendet wird, wobei die Kanalabschätzsequenz aus zwei verketteten Sequenzen S und G gebildet ist, die jeweils zwei komplementäre Sequenzen s und g aufweisen, **dadurch gekennzeichnet, dass** die komplementären Sequenzen s und g jeweils durch Erweiterungen $e_s^f$ und/oder $e_s^d$ und $e_g^f$ und/oder $e_g^d$ erweitert sind, die Duplikate ihres Endteils und/oder ihres Anfangsteils sind und die jeweils mit dem Anfang und/oder dem Ende der komplementären Sequenzen verkettet sind.

2. Kanalabschätzsequenz nach Anspruch 1, **dadurch gekennzeichnet, dass** die Länge $K^f$, $K^d$ der Erweiterungen so ist, dass die Summe davon größer als die Länge L des Kanals (3) ist.

3. Kanatabschätzsequenz nach Anspruch 1 oder 2, **dadurch gekennzeichnet, dass** die Länge $K^f$, $K^d$ der Erweiterungen gleich einem vorbestimmten Wert K ist.

4. Verfahren zum Abschätzen der Eigenschaften eines Übertragungskanals (3) zwischen einem Sender (1) und einem Empfänger (2), wobei das Verfahren auf der Seite des Senders (1) den Schritt zum Senden einer Kanalabschätzsequenz $S^E$ zum Empfänger (2) nach einem der Ansprüche 1 bis 3 aufweist, und auf der Seite des Empfängers (2) den Schritt zum Korrelieren des empfangenen Signals mit den ersten s und zweiten g komplementären Sequenzen.

5. Verfahren zum Abschätzen nach Anspruch 4, **dadurch gekennzeichnet, dass** das empfangene Signal einerseits mit der ersten komplementären Sequenz s korreliert wird, und andererseits mit der zweiten komplementären Sequenz g, die gegenüber der ersten Sequenz verzögert ist, und dass das Ergebnis der zwei Korrelationen addiert wird, um ein Korrelationssignal zu liefern, wobei die Verzögerung der zweiten komplementären Sequenz als gleich der Länge der ersten Sequenz gemäß der rechten Erweiterung der ersten Sequenz und der linken Erweiterung der zweiten Sequenz gewählt wird.

6. Verfahren zum Abschätzen nach Anspruch 5, **dadurch gekennzeichnet, dass** die Eigenschaften des Übertragungskanals (3) aus dem Ergebnis des Korrelationssignals in einem Zeitfenster [$-K^f$, $K^d$] abgeleitet werden, wobei $K^f$ und $K^d$ die jeweiligen Längen der Erweiterungen $e_s^f$, $e_s^d$ und $e_g^f$, $e_g^d$ sind.

7. Verfahren zum Abschätzen nach Anspruch 6, **dadurch gekennzeichnet, dass** die Eigenschaften des Übertragungskanals (3) aus einer Spitze einer Korrelation innerhalb des Zeitfensters abgeleitet werden.

8. Verfahren zum Abschätzen nach Anspruch 7, **dadurch gekennzeichnet, dass** die Eigenschaften des Korrelationsspitze ihre zeitliche Lokalisierung innerhalb des Zeitfensters enthalten.

Fig. 1

Fig. 2

Fig. 3